# EUROPÄISCHE PATENTANMELDUNG

(11) **EP 1 174 332 A2**
(43) Veröffentlichungstag der Anmeldung: **23.01.2002**
(21) Anmeldenummer: 01117076.8
(22) Anmeldetag: 13.07.2001
(51) Int. Cl.: B62D 33/04

(54) **Fahrzeugaufbau**

(30) Priorität: 22.07.2000 DE 10035800
(71) Anmelder: TULO Loh GmbH & Co. KG, 58730 Fröndenberg (DE)
(72) Erfinder: Dönnebrink, Andreas, 59348 Lüdinghausen (DE)
(74) Vertreter: Fritz, Edmund Lothar, Dipl.-Chem.

(57) **Zusammenfassung**

Fahrzeugaufbau mit einem etwa quaderförmigen Ladevolumen, dessen Rahmenkonstruktion untere seitliche Längsträger umfasst sowie obere Dachlängsträger,
wobei zwischen den unteren seitlichen Längsträgern (101) und den oberen Dachlängsträgern (104) parallele in Abständen angeordnete vertikale Streben angeordnet sind, die mit den oberen Dachlängsträgern (104) und den unteren seitlichen Längsträgern (101) kraftschlüssig verbunden sind,
wobei die vertikalen Streben (107) wenigstens einen seitlichen Flansch (107a) aufweisen, der sich parallel zur Seitenwand des Fahrzeugaufbaus erstreckt, wodurch sich ein Versprung ergibt und der damit verfügbare Raum Seitenwandkassetten (112) so aufnimmt, dass die äußeren Abmessungen der Seitenwandkassetten etwa bündig mit einem äußeren Steg (107b) der vertikalen Streben (107) liegen,
dadurch gekennzeichnet, dass die vertikalen Streben (107) zur Innenseite hin offen sind und die Querschnittsform von Hutprofilen, U-Profilen oder Trapezprofilen aufweisen oder eine von diesen Profilen sich ableitende Profilform mit zusätzlichen Stegen.

## Beschreibung

Die vorliegende Erfindung betrifft einen Fahrzeugaufbau mit einem etwa quaderförmigen Ladevolumen, dessen Rahmenkonstruktion untere seitliche Längsträger umfasst sowie obere Dachlängsträger, wobei zwischen den unteren seitlichen Längsträgern und den oberen Dachlängsträgern parallele in Abständen angeordnete vertikale Streben angeordnet sind, die mit den oberen Dachlängsträgern und den unteren seitlichen Längsträgern kraftschlüssig verbunden sind, wobei die vertikalen Streben wenigstens einen seitlichen Flansch aufweisen, der sich parallel zur Seitenwand des Fahrzeugaufbaus erstreckt, wodurch sich ein Versprung ergibt und der damit verfügbare Raum Seitenwandkassetten so aufnimmt, dass die äußeren Abmessungen der Seitenwandkassetten etwa bündig mit einem äußeren Steg der vertikalen Streben liegen.

Ein Fahrzeugaufbau der vorgenannten Art kann beispielsweise ein Fahrzeugwechselaufbau sein oder aber auch ein sonstiger Fahrzeugaufbau eines Lastkraftfahrzeugs. Eine Möglichkeit, die Seitenwände eines solchen Fahrzeugaufbaus zu stabilisieren, besteht darin, diese mit vielen Sicken zu versehen. Dies hat jedoch in manchen Fällen den Nachteil, daß die zu Werbezwecken meist vorgesehene Beschriftung der Außenhaut des Fahrzeugaufbaus durch die Sicken beeinträchtigt wird. Deshalb werden in diesen Fällen sogenannte Glattwandkoffer (Fahrzeugaufbauten mit glatter Außenhaut) bevorzugt. Bei diesen besteht jedoch das Problem, daß bei der herkömmlichen Bauweise der Seitenwände die notwendige Seitenwandstabilität nicht ausreichen kann. Es ist dabei zu bedenken, daß diese Fahrzeugaufbauten mit relativ schwerem Transportgut beladen werden können, wobei dieses in dem Innenraum des Fahrzeugaufbaus hochgestapelt werden kann, so beim Transport erhebliche Kräfte auf die Seitenwände einwirken. Häufig ist auch eine Doppelstockbeladung des Fahrzeugaufbaus möglich, wobei dazu Zwischenböden eingezogen werden, bei deren Beladung ebenfalls insbesondere Zugkräfte auf Abschnitte der Seitenwand einwirken.

Ein Fahrzeugaufbau der eingangs genannten Gattung ist aus der DE 198 03 299 A1 bekannt geworden. Bei diesem bekannten Fahrzeugaufbau haben die vertikalen Streben einen geschlossenen etwa kastenförmigen annähernd rechteckigen Querschnitt. Diese vertikalen Streben sind dort Strangpressprofile mit Querwänden und zusätzlichen innenliegenden Profilrohren. Zum einen sind derartige vertikale Streben als komplexe Strangpressprofile relativ aufwendig in der Fertigung und vergleichsweise teuer. Außerdem haben diese vertikalen Streben an der Innenseite eine durchgehende Profilwand und sind somit zum Laderaum des Fahrzeugaufbaus hin geschlossen. Dadurch ist in dem Bereich des Laderaums keine zusätzliche Nutzung der vertikalen Streben möglich. Der bekannte Fahrzeugaufbau ist in erster Linie für Schienenfahrzeuge vorgesehen.

Die Aufgabe der vorliegenden Erfindung besteht darin, einen Fahrzeugaufbau der eingangs genannten Gattung zu schaffen, der bei gleichzeitiger Beibehaltung einer glatten Außenhaut die Möglichkeit einer zusätzlichen Nutzung der vertikalen Streben für weitere Zwecke bietet.

Die Lösung dieser Aufgabe liefert ein gattungsgemäßer Fahrzeugaufbau mit den kennzeichnenden Merkmalen des Hauptanspruchs. Erfindungsgemäß ist vorgesehen, dass die vertikalen Streben zur Innenseite, d.h. also zum Laderaum hin offen sind und die Querschnittsform von Hutprofilen, U-Profilen oder Trapezprofilen aufweisen oder eine von diesen Profilen sich ableitende Profilform mit zusätzlichen Stegen. Die Verwendung derartiger vertikaler Streben, die zur Innenseite hin offen sind ermöglicht z.B. die Unterbringung von Systemen zur Ladungssicherung und/oder Erweiterung der verfügbaren Ladefläche oder dergleichen zumindest teilweise in den zur Innenseite des Fahrzeugaufbaus hin offenen vertikalen Streben. Die Profilform ist so, dass eine ausreichende Stabilität der vertikalen Streben gegeben ist und die Herstellung als Strangpressprofile mit komplizierter Profilform und geschlossenem Kastenquerschnitt nicht notwendig ist. Durch die seitlichen Flansche der vertikalen Streben ist ein Versprung gegeben, so dass sich dort Seitenwandkassetten anschließen können, die dann bündig mit einem äußeren Steg der vertikalen Streben liegen, wodurch eine glatte Außenhaut des Fahrzeugaufbaus erzielt wird. Der erfindungsgemäße Fahrzeugaufbau ist in erster Linie für Straßenfahrzeuge vorgesehen, insbesondere für sogenannte Fahrzeugwechselaufbauten (Wechselkoffer), die in der Regel mit wechselnden Zugmaschinen oder Anhängern transportiert werden.

Vorzugsweise haben die Profile der vertikalen Streben äußere langgestreckte Stege, die an beiden Enden jeweils etwa rechtwinklig einwärts abgewinkelt sind zu einwärts gerichteten Schenkeln. Weiterhin sind vorzugsweise an diesen Schenkeln wiederum rechtwinklig nach außen abgewinkelte Flansche angebracht. Die nach außen abgewinkelten Flansche der Profile sind außerdem vorzugsweise und/oder oben etwas kürzer als die beiden Schenkel und/oder der Steg, so daß sich jeweils in den vier Eckbereichen rechtwinklige Ausklinkungen ergeben. Diese Ausklinkungen kann man nutzen für die Aufnahme von vorzugsweise an den unteren seitlichen Längsträgern vorhandene nach oben vorstehende etwa vertikale Stege, die vorzugsweise eine etwa der Höhe der Ausklinkungen entsprechende Höhe aufweisen.

Die vertikalen Streben können auch eine andere Querschnittsform haben, zum Beispiel eine Trapezform mit nach außen abgewinkelten Schenkeln in einem Winkel der von 90° abweicht oder mit spitzwinklig nach innen gerichteten Schenkeln, so daß sich eine Trapezform mit Hinterschnitten ergibt. Die vertikalen Streben sind zur Innenseite hin offen wie zum Beispiel bei U-Profilen, Trapezprofilen oder Hutprofilen.

Die seitlichen Längsträger des Fahrzeugaufbaus weisen vorzugsweise geschlossene Rechteckprofile auf, wobei an diesen noch weitere Stege angeformt sein können. Die Stärke der seitlichen Längsträger entspricht vorzugsweise etwa der Tiefe der Profile entsprechend etwa der Länge der Schenkel der Profile, so daß die sowohl außen als auch innen etwa bündige Verbindung zwischen Profilen und seitlichen Längsträgern einfach möglich ist.

Wenn bei einem bestimmten Aufbau der Seitenwandung des Fahrzeugaufbaus die Abstände zwischen je zwei Profilen noch zu groß sind, können zwischen diese zusätzliche senkrechte Zwischenprofile angeordnet werden, die dann ebenfalls mit den unteren seitlichen Längsträgern und den oberen Dachlängsträgern verbindbar sind.

Um den Zwischenraum zwischen je zwei benachbarten Profilen der Seitenwand auszufüllen und eine glatte Außenhaut zu erzielen, werden vorzugsweise sogenannte Seitenwandkassetten verwendet. Diese haben vorzugsweise umlaufende Rahmen, die im montierten Zustand außenseitig an den Flanschen der Profile anliegen können. Diese umlaufenden Rahmen der Seitenwandkassetten können mehrfach abgewinkelt sein. Innenseitig können diese rahmenartig ausgebildeten Seitenwandkassetten dann ein flächiges Material aufnehmen. Dies kann beispielsweise aus Holzplatten oder ähnlichem bestehen und dann die Innenhaut der Seitenwand des Fahrzeugaufbaus bilden. Gemäß einer alternativen Ausführungsform kann die Innenhaut der Seitenwände aber auch aus gelochten Stahlblechen bestehen, die man beispielsweise verwendet, um dort Zurrmittel für das Verzurren der Ladung zu befestigen.

Anstelle von Seitenwandkassetten kann man einen anderweitigen mehrschaligen Seitenwandaufbau wählen. Man kann aber auch flächige einschalige Seitenwandelemente zum Beispiel in Form von Platten verwenden.

Die erfindungsgemäß verwendeten Profile haben weiterhin den Vorteil, daß sie innenseitig zwischen ihren Schenkeln Schienensysteme aufnehmen können. Derartige Schienensysteme haben vorzugsweise eine rasterartige Lochung und können verwendet werden, wenn beispielsweise eine Doppelstockbeladung des Fahrzeugaufbaus vorgesehen ist, so daß dann an den Schienensystemen in variabler Höhe zusätzlich in den Laderaum einzuziehende Böden befestigbar sind.

Bei dem erfindungsgemäßen Fahrzeugaufbau haben die vertikalen Streben den Vorteil, daß sie ganz allgemein zur Aufnahme von Systemen dienen können, die für die Ladungssicherung vorgesehen sind oder zur Erweiterung der verfügbaren Ladefläche. Man kann also diese vertikalen Streben (Profile mit unterschiedlicher Querschnittsform) zur Einleitung von Kräften nutzen, wie sie bei Verwendung solcher Systeme auftreten.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1: eine perspektivische Ansicht eines beispielhaften Fahrzeugaufbaus gemäß der vorliegenden Erfindung;
- Fig. 1a: eine vergrößerte Detailansicht eines Ausschnitts aus Fig. 1 im Verbindungsbereich zwischen Hutprofilen und seitlichen Längsträgern;
- Fig. 2: eine perspektivische Ansicht eines beispielhaften Fahrzeugaufbaus gemäß einer Variante der Erfindung;
- Fig. 3: eine perspektivische Ansicht eines Fahrzeugaufbaus ähnlich der Variante von Fig. 2, jedoch in einem anderen Montagestadium;
- Fig. 4: eine perspektivische Ansicht eines Detailausschnitts eines Fahrzeugaufbaus, der in Fig. 3 dargestellten Art;
- Fig. 5: eine vertikale Schnittansicht durch einen Längsträger eines erfindungsgemäßen Fahrzeugaufbaus;
- Fig. 6: eine Detailansicht eines Hutprofils, welches für einen erfindungsgemäßen Fahrzeugaufbau verwendet wird;
- Fig. 7: eine Draufsicht auf das Hutprofil von Fig. 6;
- Fig. 8: eine Seitenansicht eines Hutprofils von Fig. 6;
- Fig. 9: eine perspektivische Ansicht einer Seitenwandkassette, wie sie bei einem erfindungsgemäßen Fahrzeugaufbau verwendet wird;
- Fig. 10: eine vergrößerte Detailansicht eines Ausschnitts aus der Seitenwandkassette von Fig. 9.

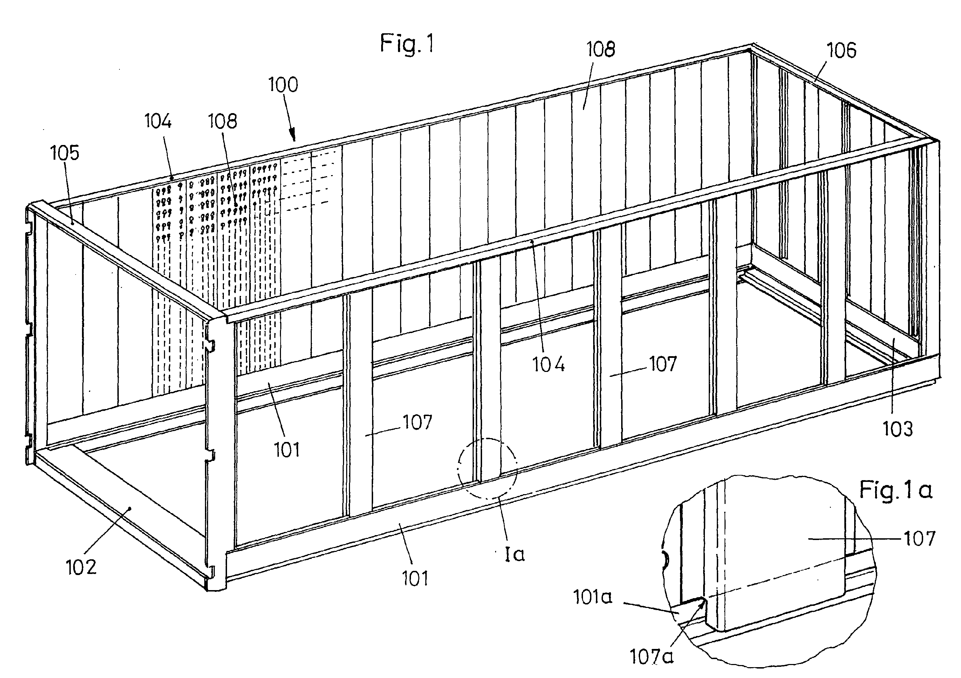

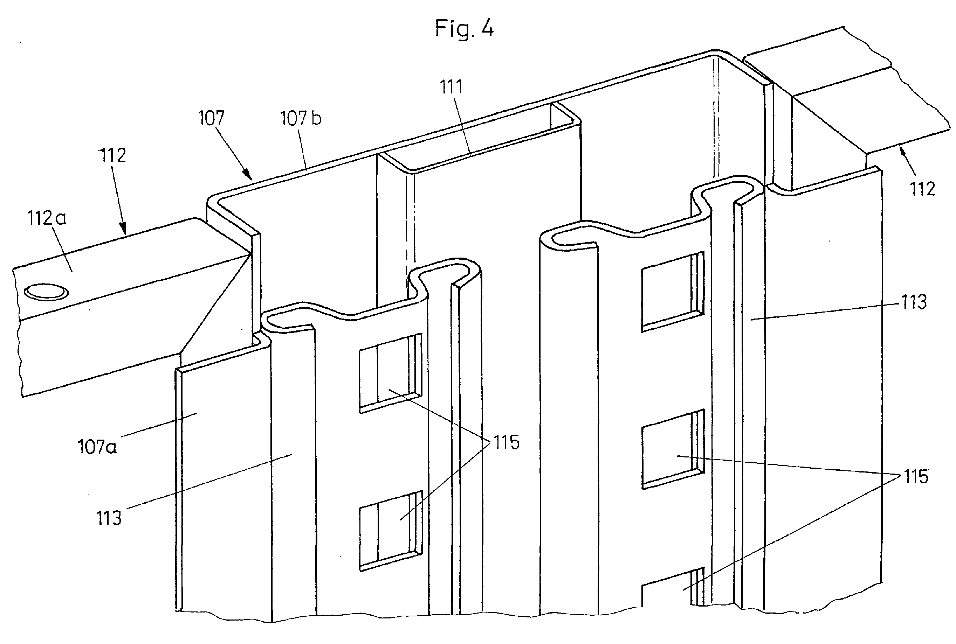

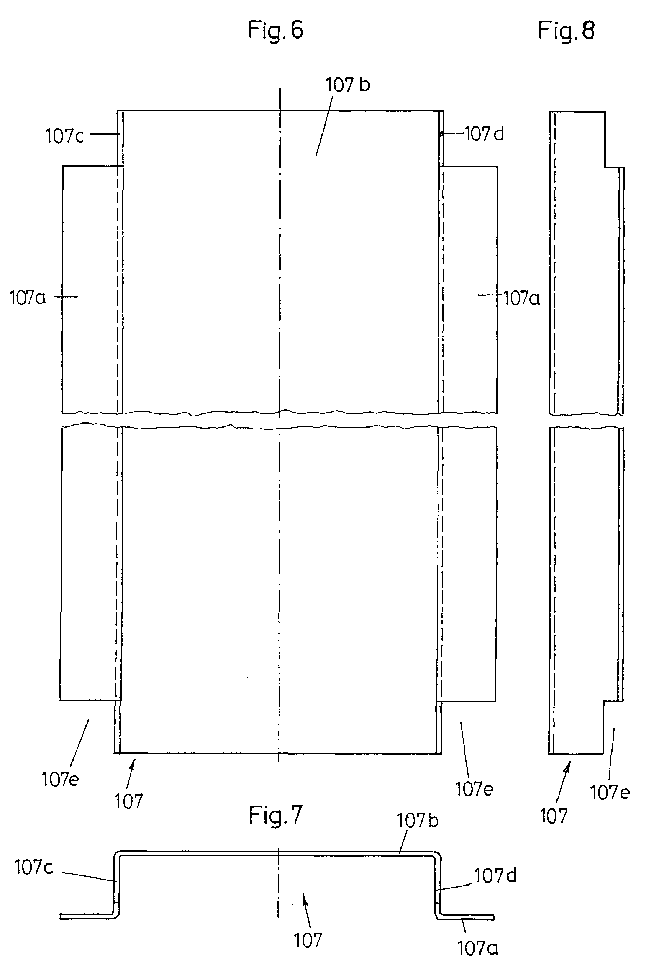

Zunächst wird auf Fig. 1 Bezug genommen.
Die Darstellung zeigt eine perspektivische Ansicht eines erfindungsgemäßen Fahrzeugaufbaus gemäß einem Beispiel der Erfindung, der insgesamt mit 100 bezeichnet ist. Dieser Fahrzeugaufbau besteht aus unteren Längsträgern 101, die im vorderen Bereich des Fahrzeugaufbaus über einen vorderen Querträger 102 verbunden sind und die im hinteren Bereich über einen hinteren Querträger 103 verbunden sind. Außerdem sind im oberen Bereich des Fahrzeugaufbaus Dachlängsträger 104 vorhanden und im Einfahrbereich ist ein Dachquerträger 105 vorgesehen. Entsprechend ist ein hinterer Dachquerträger 106 vorhanden. Zwischen den unteren Längsträgern 101 und den oberen Dachlängsträgern 104 verlaufen vertikale Streben, die in regelmäßigen Abständen angeordnet sind und die die Querschnittsform von Hutprofilen 107 aufweisen. Diese Hutprofile 107 dienen zur Stabilisierung der Seitenwände des Fahrzeugaufbaus und werden unten mit den Längsträgern 101 und oben mit den Dachlängsträgern 104 verbunden, beispielsweise durch Verschweißen oder andere Verbindungstechniken zur kraftschlüssigen Verbindung. Die genaue Querschnittsform der Hutprofile 107 ergibt sich aus den Fig. 4 und 7 und wird später noch näher erläutert.

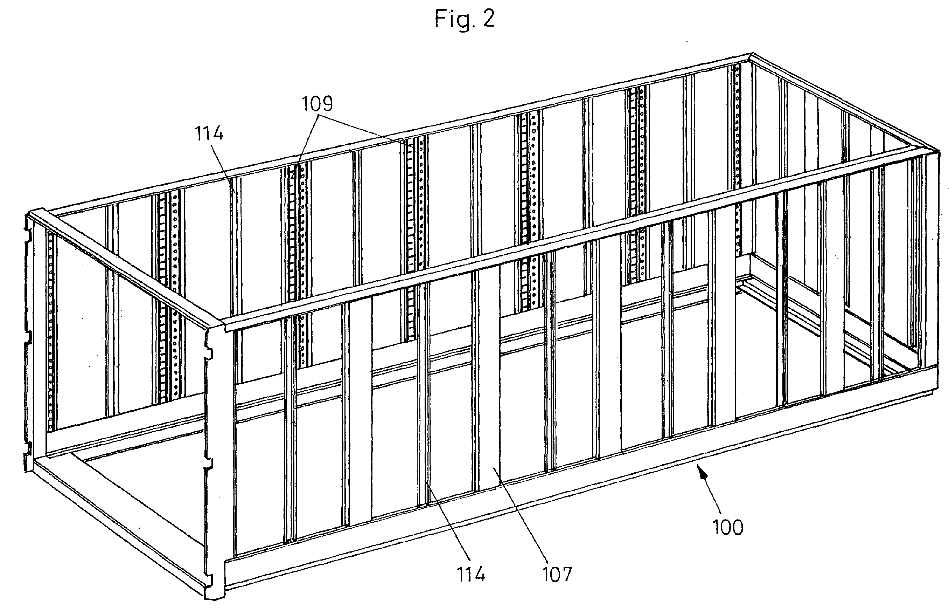

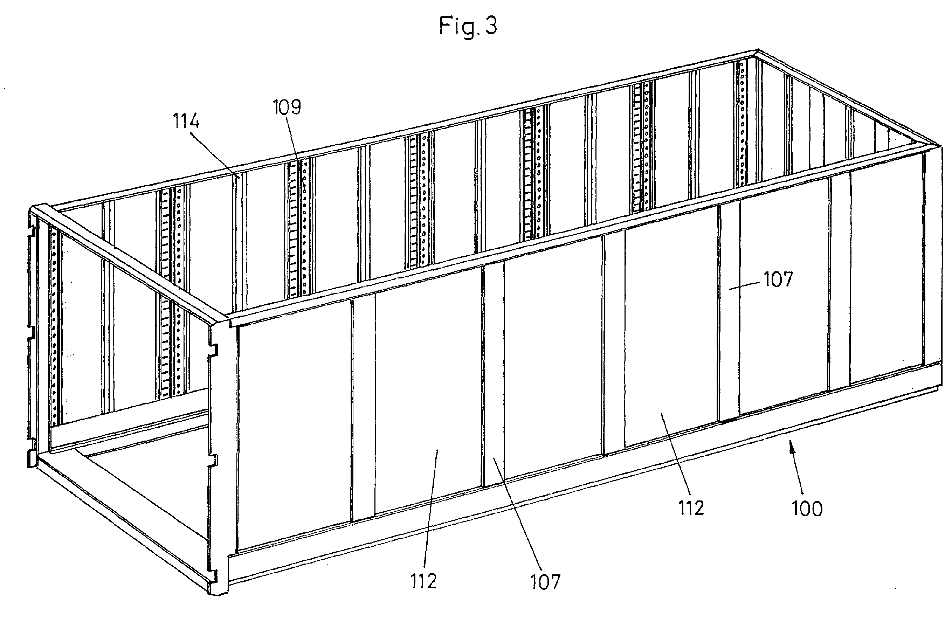

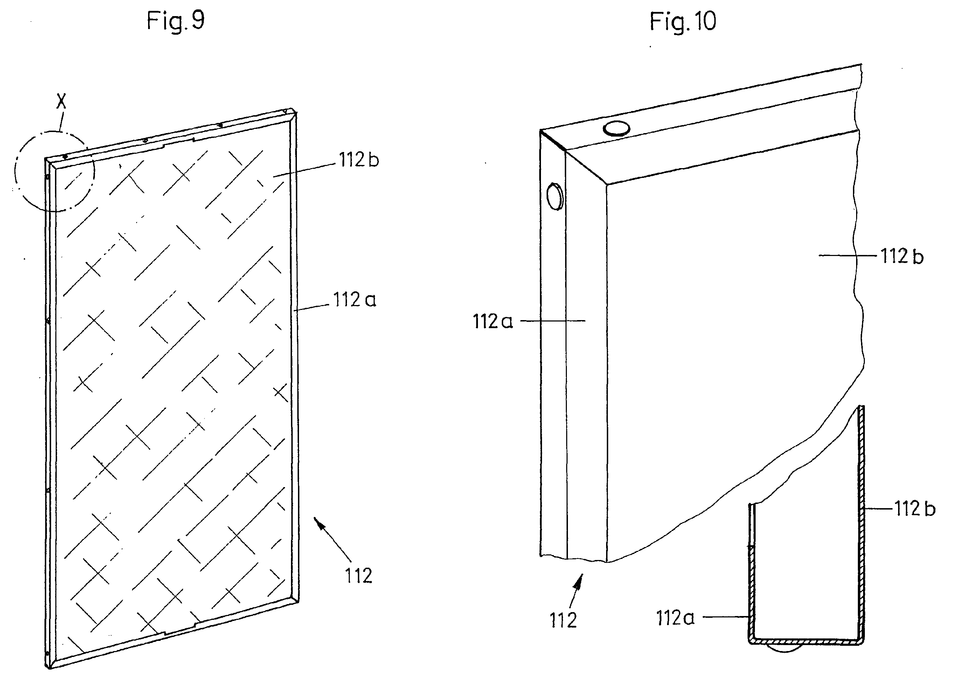

In Fig. 1 ist anhand der einen hinteren Seitenwand des Fahrzeugaufbaus gezeigt, daß die Innenhaut beispielsweise aus gelochtem Stahlblech 108 bestehen kann, an denen man Zurrbänder oder dergleichen befestigen kann. Eine andere Ausführungsvariante eines Fahrzeugaufbaus zeigt Fig. 2. Dort sind, wie man sieht, im Bereich der Längsseitenwand Schienensysteme 109 eingebaut, die z.B. von den Hutprofilen 107 aufgenommen werden können und die insbesondere dann verwendet werden, wenn eine Doppelstockbeladung des Fahrzeugaufbaus vorgesehen ist. Der genauere Aufbau dieser Schienensysteme 109 ist aus der Detailansicht gemäß Fig. 4 erkennbar. Dort erkennt man den oberen Abschnitt eines Hutprofils 107, in das ein im Querschnitt etwa U-förmiges Distanzprofil 111 eingesetzt ist. Seitlich schließen sich an das Hutprofil 107 jeweils Seitenwandkassetten 112 an, die dazu dienen können, jeweils die Zwischenräume zwischen zwei Hutprofilen 107 auszufüllen, so wie dies bei dem Fahrzeugaufbau gemäß dem Ausführungsbeispiel nach Fig. 3 dargestellt ist. Die Seitenwandkassetten 112 bilden dann zusammen mit dem Hutprofilen 107 gemäß Fig. 3 eine stabile Außenhaut des Fahrzeugaufbaus. In einer Detailansicht ist eine Seitenwandkassette 112 für sich genommen noch einmal in Fig. 9 dargestellt und später anhand dieser Zeichnung näher erläutert.

Es wird erneut auf Fig. 4 Bezug genommen. Dort kann man erkennen, daß das Hutprofil 107 zwei gelochte Profilschienen 113 aufnehmen kann, die zu dem in Fig. 2 dargestellten Schienensystem 109 gehören. Die Lochung 114 der Profilschienen 113 eignet sich zum Einhängen von hier nicht näher dargestellten Befestigungsteilen, die es ermöglichen, beispielsweise einen zusätzlichen Boden in den Fahrzeugaufbau einzuziehen für eine Doppelstockbeladung. Die Profilschienen 113 sind aber als solche bekannt und werden daher hier nicht näher erläutert. Im Rahmen der Erfindung geht es nur darum anhand von Fig. 4 zu demonstrieren, daß man in das erfindungsgemäße Hutprofil 107 zwei Profilschienen 113 für ein solches Schienensystem 109 einbringen kann.

In Fig. 2 erkennt man, daß gegebenenfalls zwischen jeweils zwei Hutprofilen angeordnete senkrechte Zwischenprofile 114 für die Seitenwand des Fahrzeugaufbaus verwendet werden. Diese Zwischenprofile 114 dienen dazu eine gegebenenfalls zu große Distanz zwischen zwei Hutprofilen 107 zu überbrücken, beispielsweise dann, wenn wie dies in der Zeichnung gemäß Fig. 3 dargestellt ist, die Seitenwand mit Kassetten 112 verkleidet wird und die Innenhaut aus Platten aus einem solchen Material besteht, welches die im Transport auftretenden Kräfte, die durch den Druck der Ladung verursacht werden, bei der gemäß Fig. 2 vorgesehenen Distanz der Hutprofile 107 nicht aufnehmen kann. Die Zwischenprofile 114 dienen also zur Stabilisierung der Seitenwand und kommen insbesondere bei Verwendung einer Innenhaut aus Holz, beispielsweise Sperrholz in Betracht.

Fig. 2 zeigt einen Fahrzeugaufbau mit den Hutprofilen 107 und jeweils zwischen zwei Hutprofilen 107 angeordneten Zwischenprofilen 114 in einem Montagestadium, in dem die Seitenwand noch offen ist.

Fig. 3 zeigt dagegen einen Fahrzeugaufbau, bei dem die Seitenwand die zwischen je zwei Hutprofile 107 eingeschobenen Seitenwandkassetten 112 umfasst. Diese Seitenwandkassetten 112 kann man auch in der vergrößerten Darstellung gemäß Fig. 4 erkennen. Man sieht dort weiterhin, daß das Hutprofil 107 an beiden Seiten jeweils einen Flansch 107a aufweist, der rechtwinklig nach außen hin umgebogen ist und parallel zur Seitenwand des Fahrzeugaufbaus sich erstreckt. Dadurch ergibt sich ein Versprung und der damit verfügbare Raum kann die Rahmen 112a der Seitenwandkassetten 112 so aufnehmen, daß die äußeren Abmessungen der Seitenwandkassetten 112 etwa bündig mit dem äußeren Steg 107b der Hutprofile 107 liegen.

Die Form der Hutprofile 107 ergibt sich auch aus den Fig. 6 bis 8. Der äußere langgestreckte Steg 107b ist an beiden Enden jeweils etwa rechtwinklig einwärts abgewinkelt, so daß sich zwei einwärts gerichtete Schenkel 107c, 107d ergeben, an denen dann wiederum die rechtwinklig nach außen abgewinkelten Flansche 107a angebracht sind, so dass sich insgesamt die als Hutprofil bezeichnete Querschnittsform ergibt. Dabei ist zu berücksichtigen, daß wie man aus Fig. 6 erkennen kann, die beiden äußeren Flansche 107a etwas kürzer sind als die beiden Schenkel 107c, 107d und der Steg 107b und oben und unten jeweils ein Stück vor diesen enden. Dadurch ergeben sich rechtwinklige Ausklinkungen 107e jeweils in den vier Eckbereichen.

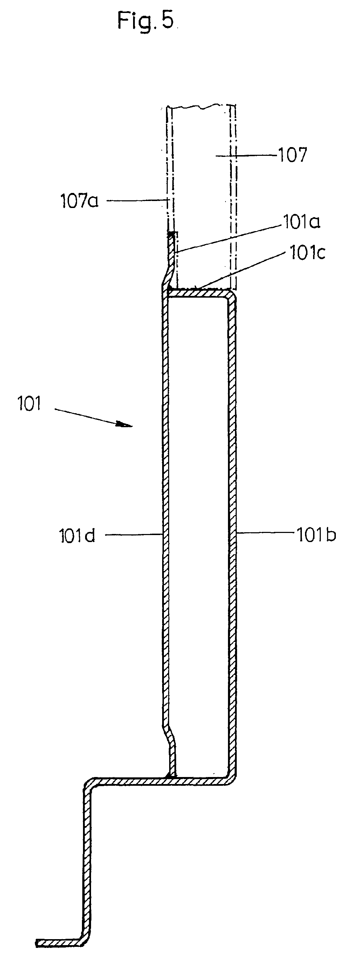

Das Zusammenwirken der Hutprofile 107 und der mit diesen zu verbindenden unteren Längsseitenträger 101 lässt sich am besten unter Bezugnahme auf die Fig. 1, 1a sowie Fig. 5 und Fig. 8 erläutern. Fig. 5 zeigt einen Vertikalschnitt durch einen Längsseitenträger 101 und man erkennt, daß dieser an der Innenseite im oberen Bereich einen etwa vertikalen leicht verkröpften nach oben vorstehenden Steg 101a aufweist. In Fig. 1a kann man diesen Steg 101a erkennen. In Fig. 1a ist außerdem das untere Ende eines Hutprofils 107 erkennbar, welches dort die zuvor anhand von Fig. 6 beschriebenen Ausklinkungen 107e aufweist, die im montierten Zustand den Steg 101a des Längsseitenträgers 101 aufnehmen. Der mittlere Steg 107b des Hutprofils endet somit im montierten Zustand außen etwa bündig mit der auch in Fig. 5 erkennbaren äußeren Wandung 101b des Längsseitenträgers 101. Die beiden einwärts gerichteten Schenkel 107c, 107d ruhen quasi auf der oberen horizontalen Wandung 101c des Längsseitenträgers 101. Der Steg 101a ragt in die Ausklinkungen 107e, die entsprechend dimensioniert sind in ihrer Höhe wie man auch aus der Seitenansicht des Hutprofils 107 gemäß Fig. 8 entnehmen kann. Demgemäss sind die Hutprofile 107 so ausgebildet, daß sie im montierten Zustand außen mit ihren Stegen 107b mit der äußeren Wandung 101b der Längsseitenträger bündig verlaufen und innen mit ihren Flanschen 107a mit der inneren Wandung 101d (siehe Fig. 5) beziehungsweise dem Steg 101a des Längsseitenträgers fluchten. Die innere Wandung 101d der Längsträger 101 verläuft parallel zur äußeren Wandung 101b, so dass sich ein geschlossener Rechteckkanal ergibt.

Die bereits in Fig. 4 beschriebenen Seitenwandkassetten 112 sind noch einmal in Fig. 9 für sich dargestellt, wobei Fig. 10 einen vergrößerten Detailausschnitt des Eckbereichs zeigt. Diese Seitenwandkassette 112 besteht im Prinzip aus dem Rahmen 112a, der zweifach rechtwinklig abgewinkelt ist und der mit dem Rahmen 112a einstückigen Wandfläche 112b, die bei montierter Seitenwandkassette die Außenhaut des Fahrzeugaufbaus bildet, wie dies auch in Fig. 3 erkennbar ist. Durch die rahmenartige Ausbildung der Seitenwandkassette 112 ist es möglich, das dieser Rahmen ein flächiges Material, z.B. eine Holzplatte oder dergleichen aufnimmt, die dann als Innenhaut für die Seitenwand des Fahrzeugaufbaus dient. In Fig. 10 kann man besser erkennen, daß der Rahmen 112a der Seitenwandkassette durch zweifache rechtwinklige Abkantung gebildet ist und zwar einmal von der Außenhaut 112b her gesehen rechtwinklig nach innen abgekantet und dann von dort aus noch einmal rechtwinklig einwärts abgekantet.

## Patentansprüche

1. Fahrzeugaufbau mit einem etwa quaderförmigen Ladevolumen, dessen Rahmenkonstruktion untere seitliche Längsträger umfasst sowie obere Dachlängsträger,
wobei zwischen den unteren seitlichen Längsträgern (101) und den oberen Dachlängsträgern (104) parallele in Abständen angeordnete vertikale Streben angeordnet sind, die mit den oberen Dachlängsträgern (104) und den unteren seitlichen Längsträgern (101) kraftschlüssig verbunden sind,
wobei die vertikalen Streben (107) wenigstens einen seitlichen Flansch (107a) aufweisen, der sich parallel zur Seitenwand des Fahrzeugaufbaus erstreckt, wodurch sich ein Versprung ergibt und der damit verfügbare Raum Seitenwandkassetten (112) so aufnimmt, dass die äußeren Abmessungen der Seitenwandkassetten etwa bündig mit einem äußeren Steg (107b) der vertikalen Streben (107) liegen,
**dadurch gekennzeichnet, dass** die vertikalen Streben (107) zur Innenseite hin offen sind und die Querschnittsform von Hutprofilen, U-Profilen oder Trapezprofilen aufweisen oder eine von diesen Profilen sich ableitende Profilform mit zusätzlichen Stegen.

2. Fahrzeugaufbau nach Anspruch 1, **dadurch gekennzeichnet, daß** die vertikalen Streben (107) nach außen abgewinkelte Flansche (107a) aufweisen.

3. Fahrzeugaufbau nach Anspruch 1 oder 2, **dadurch gekennzeichnet, daß** die vertikalen Streben (107) (Profile) zur Aufnahme von Systemen zur Ladungssicherung und/oder Erweiterung der verfügbaren Ladefläche dienen.

4. Fahrzeugaufbau nach einem der Ansprüche 1 bis 3,
**dadurch gekennzeichnet, daß** die Profile (107) der vertikalen Streben äußere langgestreckte Stege (107b) aufweisen, die an beiden Enden jeweils einwärts abgewinkelt sind zu einwärts gerichteten Schenkeln (107c, 107d), an denen wiederum rechtwinklig nach außen abgewinkelte Flansche (107a) angebracht sind.

5. Fahrzeugaufbau nach einem der Ansprüche 1 bis 4,
**dadurch gekennzeichnet, daß** die vertikalen Streben trapezförmig sind mit etwa im 45° Winkel nach außen abgewinkelten Schenkeln oder mit nach innen abgewinkelten Schenkeln, so daß sich eine Querschnittsform mit Hinterschnitten ergibt.

6. Fahrzeugaufbau nach einem der Ansprüche 1 bis 5,
**dadurch gekennzeichnet, daß** die nach außen abgewinkelten Flansche (107a) der Profile (107) unten und/oder oben etwas kürzer sind als die beiden Schenkel (107c, 107d) und/oder der Steg (107b) so daß sich jeweils in den vier Eckbereichen rechtwinklige Ausklinkungen (107e) ergeben.

7. Fahrzeugaufbau nach einem der Ansprüche 1 bis 6,
**dadurch gekennzeichnet, daß** die seitlichen Längsträger (101) geschlossene Rechteckprofile umfassen mit einer äußeren Wandung (101b) und einer parallelen inneren senkrechten Wandung (101d) und daß die Stärke der seitlichen Längsträger (101) etwa der Tiefe der Profile (107) entsprechend etwa der Länge deren Schenkel (107c, 107d) entspricht.

8. Fahrzeugaufbau nach einem der Ansprüche 1 bis 7,
**dadurch gekennzeichnet, daß** die unteren seitlichen Längsträger (101) nach oben vorstehende etwa vertikale Stege (101a) aufweisen, deren Höhe in etwa der Höhe der Ausklinkungen (107e) der Profile (107) entspricht.

9. Fahrzeugaufbau nach einem der Ansprüche 1 bis 8,
**dadurch gekennzeichnet, daß** die vertikalen Stege (101a) der unteren seitlichen Längsträger (101) und/oder entsprechende Stege der Dachträger (104) und die Flansche (107a) der vertikalen Streben (107) jeweils etwa in einer Ebene liegen.

10. Fahrzeugaufbau nach einem der Ansprüche 1 bis 9,
**dadurch gekennzeichnet, daß** jeweils zwischen zwei Profilen (107) angeordnete senkrechte Zwischenprofile (114) vorgesehen sind, die mit den unteren seitlichen Längsträgern (101) und den oberen Dachlängsträgern (104) verbindbar sind.

11. Fahrzeugaufbau nach einem der Ansprüche 1 bis 10,
**dadurch gekennzeichnet, daß** Seitenwandkassetten (112) vorgesehen sind um den Raum zwischen zwei benachbarten Profilen (107) der Seitenwand auszufüllen.

12. Fahrzeugaufbau nach einem der Ansprüche 1 bis 11,
**dadurch gekennzeichnet, dass** zwischen den Profilen (107) flächige einschalige Seitenwandelemente, vorzugsweise Platten angeordnet sind.

13. Fahrzeugaufbau nach einem der Ansprüche 1 bis 12,
**dadurch gekennzeichnet, daß** die Profile (107) innenseitig zwischen ihren Schenkeln (107c, 107d) Schienensysteme (109, 113) aufnehmen, die eine rasterartige Lochung (114) aufweisen.

14. Fahrzeugaufbau nach einem der Ansprüche 1 bis 13,
**dadurch gekennzeichnet, daß** die Seitenwandkassetten (112) umlaufende Rahmen (112a) aufweisen, die im montierten Zustand außenseitig an den Flanschen (107a) der Profile (107) anliegen.

15. Fahrzeugaufbau nach einem der Ansprüche 1 bis 14,
**dadurch gekennzeichnet, daß** Distanzprofile (111) vorgesehen sind, die zwischen der Innenseite des äußeren Stegs (107) der Profile (107) und dem Schienensystem (109), vorzugsweise den Profilschienen (113) angeordnet sind.

16. Fahrzeugaufbau nach einem der Ansprüche 1 bis 15,
**dadurch gekennzeichnet, daß** die rahmenartig ausgebildeten Seitenwandkassetten (112) innenseitig ein flächiges Material, vorzugsweise eine Holzplatte oder dergleichen aufnehmen, welches die Innenhaut der Seitenwand des Fahrzeugaufbaus bildet.

17. Fahrzeugaufbau nach einem der Ansprüche 1 bis 16,
**dadurch gekennzeichnet, daß** die Innenhaut der Seitenwände des Fahrzeugaufbaus gelochte Stahlbleche (108) umfasst.
